# EUROPEAN PATENT SPECIFICATION

(11) **EP 1 195 307 B1**
(45) Date of publication and mention of the grant of the patent: **10.09.2003**
(21) Application number: 00121884.1
(22) Date of filing: 06.10.2000
(51) Int. Cl.: B61D 37/00, B60N 3/00, A47B 13/08

(54) **Shock-absorbing table, in particular for means of transport**
Stossdämpfender Tisch, insbesondere für Transportmittel
Table pouvant absorber les chocs, en particulier pour moyens de transport

(43) Date of publication of application: 10.04.2002
(73) Proprietor: Saira Alluminio SpA, 37069 Villafranca Di Verona (VR) (IT)
(72) Inventor: Tosoni, Luca, 37060 Custoza (VR) (IT)
(74) Representative: Petraz, Gilberto

(56) References cited:
- EP-A- 0 530 819
- DE-A- 3 234 828
- DE-C- 3 624 156
- DE-C- 19 703 769
- DE-U- 9 206 638
- FR-A- 2 548 981
- US-A- 4 872 723

## Description

### TECHNICAL FIELD

This invention concerns a board which can be positioned in a means of transport and equipped with a shock-absorbing safety device.

More specifically, this invention refers to a board, which can be positioned in a means of transport on wheels, such as a railway coach, and which is constructed in such a way as to become deformed, absorbing shocks against the passengers as a result of accidents occurring to the means of transport.

### BACKGROUND ART

It is known that vehicles designed for the transport of several passengers, such as, for example, railway coaches, coaches or camper vans, have spaces that can be occupied by tables or shelves in general which are useful to passengers for placing objects on them and also for carrying out activities that make their journey more pleasant and agreeable.

In the majority of cases these tables are the foldaway type, rotating on a pin or a hinge from a rest position to a position suitable for their use.

Passengers normally sit around the table which usually extends at right angles to the vehicle's direction of travel, with one of its sides attached to an inside wall of the means of transport.

This arrangement is particularly advantageous especially if the table is in correspondence with a window of the vehicle, thus allowing the passengers a good view outside as well as ensuring good natural lighting of the inside of the means of transport.

For example FR-A-2548981 describes a group of chairs for means of transport particularly for motor vehicles. Said group of chairs is furnished with a table which can be placed inside a means of transport and attached to it by means of rigid support frame, said table comprising a shock-absorbing element.

Furthermore DE-A-3234828 describes a table for small rooms in which the top of the table is movable in a horizontal plane allowing to gain space in said small rooms for example for the sit or the stand up of its users.

One drawback of this kind of tables is that, in the event of a sudden stop of the vehicle as a result of an accident, the inertial effect felt by the passengers not wearing seat belts is such as to cause a devastating impact of the edges of the table against the abdominal area of the occupants of the means of transport.

To date various solutions have been proposed which foresee the construction of tables with very rounded edges and made from materials which are to a certain extent deformable and able to absorb shock effects.

However, the results of crash-tests carried out on known types of tables are not particularly reassuring. In all cases, in fact, the maximum admissible perforation for an abdominal cell (40 millimetres) is exceeded by shocks created at a speed of 30 km/h.

### DESCRIPTION OF THE INVENTION

The aim of this invention is to provide a safety device for a table or board to be positioned inside a means of transport, capable of ensuring the safety or the least damage possible for the passengers seated at the table.

This invention also aims to provide a safety device with features that do not reduce the stability of the table when it is being used.

Another aim of this invention is to provide a safety device that can be applied to any type of shelf or table which has a rigid frame that can be attached to one or more walls of the means of transport.

This is achieved by means of a safety device for a table that can be positioned inside a means of transport and having the features described in the main claim.

The dependent claims describe advantageous embodiments of the invention.

The safety device according to the present invention comprises a fixed rigid frame which supports and guides at least one slide which is firmly constrained to it and designed to support a relatively deformable table, being housed inside it.

According to an advantageous form of embodiment of the invention said slide, which presents its longitudinal axis essentially parallel to the direction of travel of the means of transport inside which the table is positioned, is equipped, in correspondence with each longitudinal side, with a wedge-shaped element designed, in the event of a violent impact of the table with another body, to partially telescope said table.

The table is fitted with a pair of parallel plates, in correspondence with each slide, positioned at the side of the respective slide and for the majority of its length in order to guide it in the partial telescoping of said table.

The table can comprise a panel consisting of honeycomb reticular material which, becoming deformed as a result of a knock against a passenger close to the table, tends to be telescoped by the slide guided by the plates; in this way, the safety device ensures excellent absorption of the variation of the amount of movement, considerably limiting the impulse of the impact force in order to limit the damage to the passenger.

### ILLUSTRATION OF DRAWINGS

Other features and advantages of the invention will become apparent on reading the following description of one form of embodiment of the invention, given as a nonlimiting example, with the help of the enclosed drawings, in which:

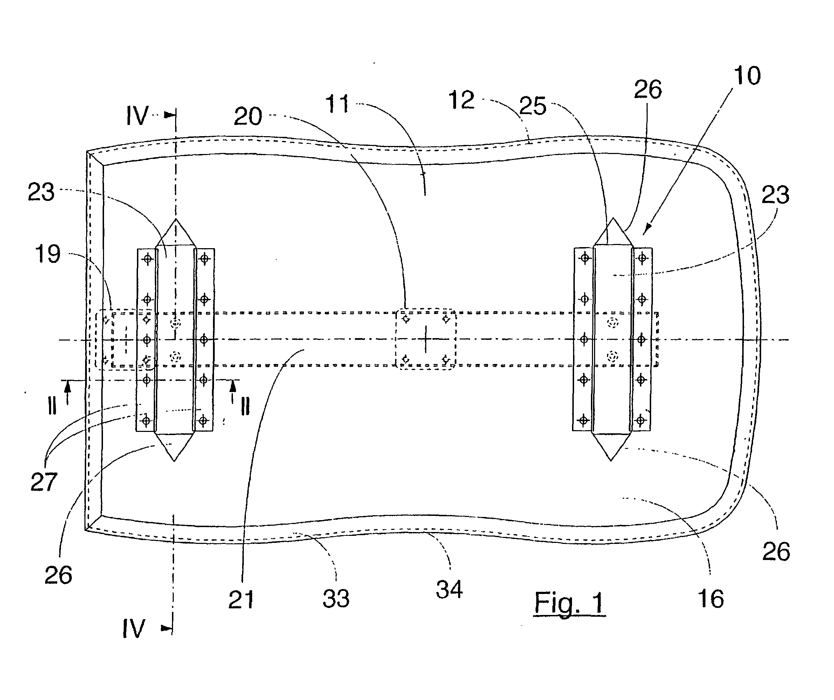

- figure 1 is a plan view of the device according to the invention;
- figure 2 is a partial cross-section view along the line II-II of figure 1;
- figure 3 is a reduced scale side view, of figure 1;
- figure 4 is a cross-section view along the line IV-IV of figure 1;
- figure 5 is an enlarged plan view of a plate; and
- figure 6 is a side view of figure 5.

### DESCRIPTION OF ONE EMBODIMENT

In the figures, reference sign 10 generally indicates a safety device, in particular a safety device for a table that can be positioned inside a means of transport.

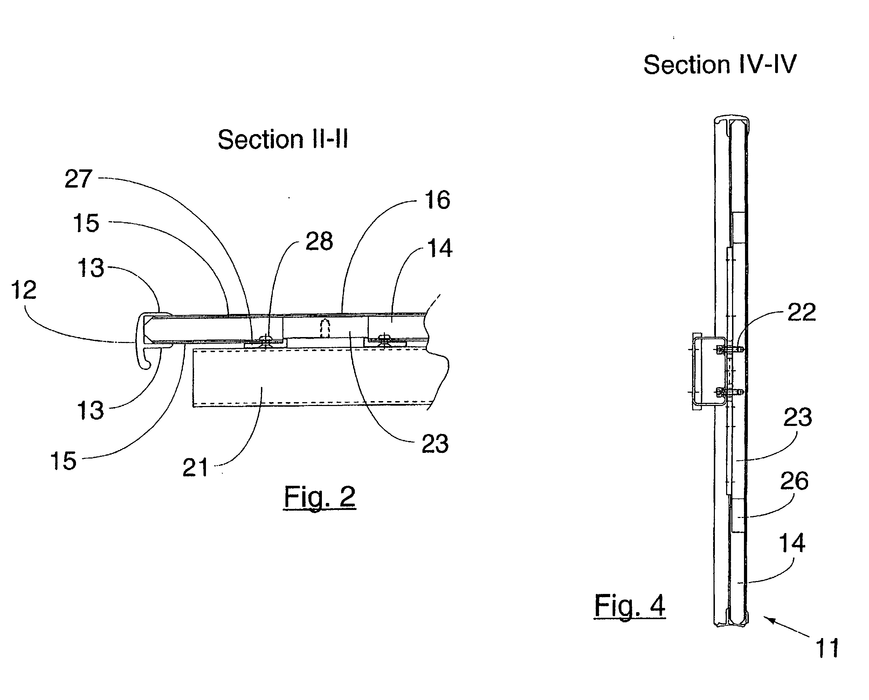

The shelf or table 11 consists of a rigid outer edge 12 (figure 2) presenting a pair of tabs 13 designed to contain a panel 14 made from material which is relatively deformable in directions parallel to the surface of the table.

Between the panel 14 and each respective tab 13 is a sheet of metallic material 15 while the visible outer surface of the table 11 can be coated with a protective layer 16 for example of plastic laminate such as formica.

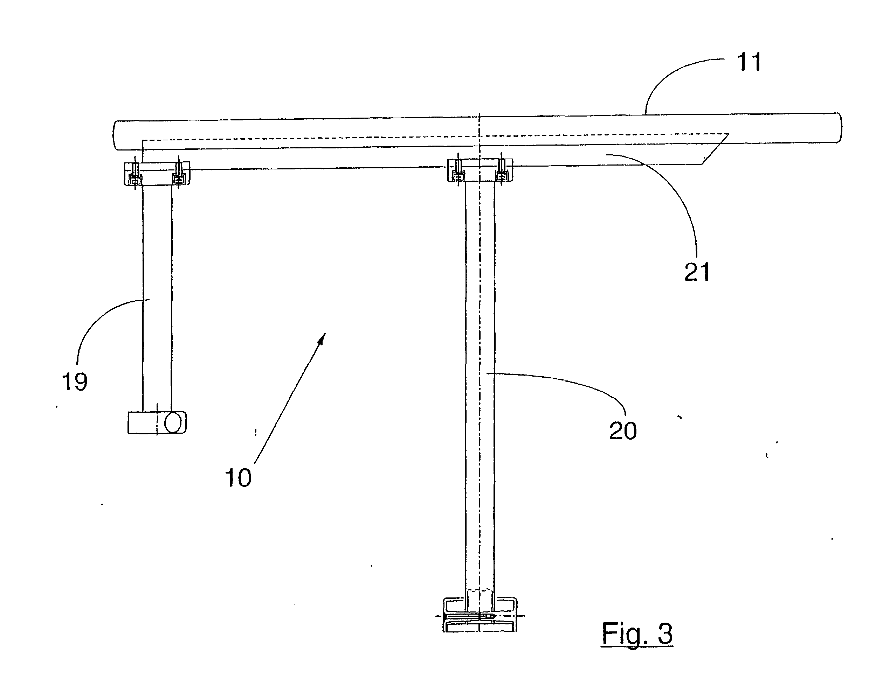

With reference to figure 3, it can be seen that in the working position table 11 is supported by a fixed rigid frame 18 consisting of a peripheral upright 19 which can be attached to the wall of the vehicle, a central upright 20 which can be rested on the floor of the vehicle, a crosspiece 21, connecting the two uprights 19 and 20, positioned essentially in correspondence with the longitudinal axis of the table 11.

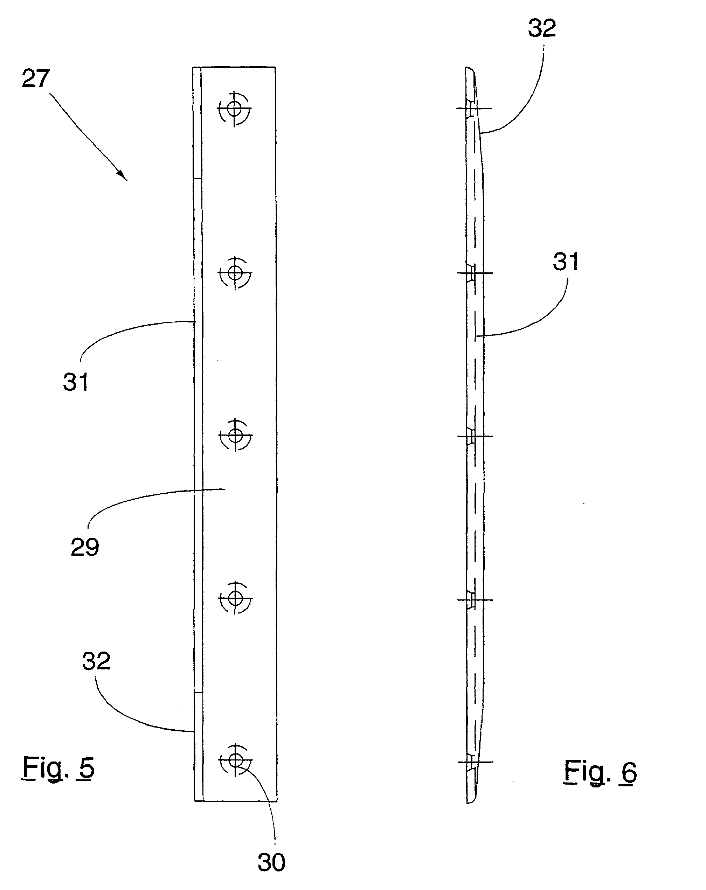

Rigid metallic slides 23 with their longitudinal axis essentially at right angles to that of the table and parallel to the direction of travel of the vehicle are fixed to the crosspiece 21, for example by means of screws 22 (figure 4).

Each slide 23 is housed in a cavity 24, accessible from the underside of the table 11, in the panel 14 and can comprise, in correspondence with each longitudinal end 25, a wedge-shaped element 26.

The wedge-shaped element 26 can comprise a triangular or tapered configuration, for example semi-elliptical.

As can be seen in figure 2, in correspondence with each slide 23, a pair of plates 27 are fixed, for example by means of rivets 28, to the not-visible sheet 15 of the table 11.

The plates 27, parallel to each other, are positioned at the sides of the respective cavity 24 and are laterally adjacent to the slide 23 for a good part of its length in order to guide it in the partial telescoping of the table 11.

With reference to figures 5 and 6, it can be seen that each plate comprises a base 29 in which a series of through holes 30 are arranged longitudinally and equidistant and designed to accept respective rivets 28.

One longitudinal side of each plate 27 comprises a strip 31, protruding from the base 29, designed to engage against the entry of the cavity 24 while the base 29 rests against the sheet 15 of the underside of the table 11.

Each longitudinal end of the strip 31 has a bevelled section 32 designed to facilitate the movement of the slide 23 and prevent sticking.

Each longitudinal edge 12a of the table 11 can comprise an undulating configuration, albeit on the same plane as panel 14, with convex sections 33 near the corners of the table and a concave section 34 in the central part of the table 11.

In this way the configuration of table 11 will absorb any shocks caused by external bodies thanks to the deformability of the central concave section 34.

The surface of the slide 23 which faces towards the exterior of the panel 14 may comprise a spacer (not shown in the drawings) to prevent direct contact with the crosspiece 21 of the frame 18.

In accordance with a particularly advantageous embodiment of the invention, each metallic element of the safety device 10 and the table 11 is made of aluminium to avoid corrosive phenomena due to different values of the electrochemical potential which would give rise to galvanic type corrosive phenomena.

According to a preferred form of embodiment, the panel 14 has an aluminium cell honeycomb conformation with density equal to 82 kg per cubic metre and cells measuring 6.4 millimetres.

The cell cavity axis is essentially at right angles to the surface of the table 11 in order to ensure good deformability relative to sliding in directions on the same plane as the panel 14 together with good compression resistance in a direction at right angles to the surface of the panel 14.

The metallic sheets 15 can be made of aluminium with a thickness of one millimetre, while the plastic laminate may be 0.6 millimetres thick.

In overall terms, the panel 14 may, for example, be 20 millimetres thick.

Sudden decelerations and consequent stopping of the vehicle can cause violent impacts of the abdominal area of the passengers against the longitudinal edge 12a of the table 11.

As a result of the shock, panel 14 tends to be partially telescoped by the slides 23 blocked by the frame 18.

The movement of the slides 23 is made easier by the presence of the respective wedge-shaped elements 26 and guided by the respective plates 27.

Crash tests carried out by the applicant have shown that, thanks to this invention, a large amount of energy of the impact is absorbed by the deformation of the panel 14, which gives way as a result of the shock and moves in the same direction as the passenger, avoiding causing the serious abdominal trauma that is provoked by the tables of the known type which, although made from materials that are deformable to a limited degree, are always rigidly fixed to the support frame.

The invention has been described with reference to a preferred form of embodiment of the same; it is, however, clear that the invention is susceptible to numerous variations which are included in its aims, within the framework of mechanical equivalents.

By way of example, the invention can be applied to any other type of table for a means of transport, for example for tables equipped with fold-down hinges positioned parallel to the longitudinal or the transverse axis of the table.

In such cases, the table 11 comprises, for example, a side edge 17 which can be hinged to a wall of the means of transport so that it can be lifted to a working position or folded down to a rest position.

## Claims

1. A table or board (11) to be positioned inside a means of transport and attached to it by means of a rigid support frame (18), said table or board (11) comprising a shock-absorbing element (14), and being mounted on said rigid support frame (18) **characterised by** a safety device (10) comprising at least one slide (23) firmly fixed to said support frame (18), said slide being mounted between a pair of guide plates (27) positioned on said shock-absorbing element (14) and fixed to the latter and the fact that the longitudinal axis of said slide (23) is essentially parallel to the direction of travel of said means of transport.

2. A table (11) according to claim 1, **characterised in that** said table (10)is mounted on said rigid support frame (18) in such a way that it is at least partially mobile in respect of said rigid support frame.

3. A table (11) according to claim 2, **characterised in that** it comprises, in correspondence with each longitudinal end, a wedge-shaped element (26) designed, in the event of a violent impact of said table (11) with another body, to partially telescope the said shock-absorbing element (14).

4. A table (11) according to claim 3, **characterised in that** said wedge-shaped element (26) presents a triangular or semi-elliptical cross-section.

5. A table (11) according to one of the claims from 2 to 4, **characterised in that** each of the guide plates (27) comprises a base (29) presenting a lateral raised strip (31).

6. A table (11) according to claim 5, **characterised in that** said strip (31) comprises a bevelled section (32) at each longitudinal end.

7. A table (11) according to any of the claims from 2 to 6, **characterised in that** said slide (23) comprises a spacer on the surface facing said frame (18).

8. A table (11) according to anyone of the preceding claims, **characterised in that** said shock-absorbing element consists of a panel (14) enclosed between sheets (15) of metallic material and layers of plastic laminate.

9. A table (11) according to claim 8, **characterised in that** said panel (14) has a honeycomb configuration with cells that can be filled with foamed material.

10. A table (11) according to anyone of the preceding claims, **characterised in that** it is positioned inside a train, or a motor vehicle, for example a coach or a camper van, or an aeroplane or a ship.

## Patentansprüche

1. Ein Tisch oder Brett (11) zur Anordnung innerhalb eines Transportmittels und an ihm mittels eines steifen Stützrahmens (18) befestigt, wobei der Tisch oder das Brett (11) ein stoßabsorbierendes Element (14) aufweist und an dem steifen Stützrahmen (18) angeordnet ist, **gekennzeichnet durch** eine Sicherheitseinrichtung (10), mit wenigstens einem Schlitten (23), der an dem Stützrahmen (18) festgelegt angeordnet ist, wobei der Schlitten zwischen einem Paar von Führungsplatten (27) angeordnet ist, die an dem stoßabsorbierenden Element (14) angeordnet und an letzterem festgelegt sind und **durch** die Tatsache, dass die Längsachse des Schlittens (23) weitgehend parallel zu der Richtung der Bewegung des Transportmittels verläuft.

2. Ein Tisch (11) nach Anspruch 1, **dadurch gekennzeichnet, dass** der Tisch (10) an dem steifen Stützrahmen (18) in einer solchen Weise angebracht ist, dass er wenigstens teilweise beweglich ist bezogen auf den steifen Stützrahmen.

3. Ein Tisch (11) nach Anspruch 2, **dadurch gekennzeichnet, dass** er in Übereinstimmung mit jedem Längsende ein keilförmiges Element (26) aufweist, welches so ausgebildet ist, dass es im Falle eines kräftigen Auftreffens des Tisches (11) an einem anderen Körper das stoßabsorbierende Element (14) partiell zusammenschiebt.

4. Ein Tisch (11) nach Anspruch 3, **dadurch gekennzeichnet, dass** das keilförmige Element (26) einen dreieckförmigen oder halbelliptischen Querschnitt zeigt.

5. Ein Tisch (11) nach einem der Ansprüche von 2 bis 4, **dadurch gekennzeichnet, dass** jede der Führungsplatten (27) eine Basis (29) besitzt, die einen seitlichen erhöhten Streifen (31) aufweist.

6. Ein Tisch (11) nach Anspruch 5, **dadurch gekennzeichnet, dass** der Streifen (31) einen schräg zulaufenden Abschnitt (32) an jedem längsgerichteten Ende besitzt.

7. Ein Tisch (11) nach einem der Ansprüche von 2 bis 6, **dadurch gekennzeichnet, dass** der Schlitten (23) einen Abstandshalter an der dem Rahmen (18) zugewandten Fläche aufweist.

8. Ein Tisch (11) nach einem der vorstehenden Ansprüche, **dadurch gekennzeichnet, dass** das stoßabsorbierende Element aus einer Platte (14) besteht, die zwischen Lagen (15) aus einem metallischen Werkstoff und Lagen eines Kunststofflaminats eingeschlossen ist.

9. Ein Tisch (11) nach Anspruch 8, **dadurch gekennzeichnet, dass** die Platte (14) eine Bienenwabenkonfiguration aufweist mit Zellen, die mit einem geschäumten Werkstoff auffüllbar sind.

10. Ein Tisch (11) nach einem der vorstehenden Ansprüche, **dadurch gekennzeichnet, dass** er innerhalb eines Zuges oder eines Motorfahrzeugs, beispielsweise eines Wagens oder eines Wohnmobils oder eines Flugzeugs oder eines Schiffes angeordnet ist.

## Revendications

1. Table ou plateau (11) à installer à l'intérieur d'un moyen de transport et fixé à ce dernier à l'aide d'un cadre support rigide (18), ladite table ou ledit plateau (11) comprenant un élément pour absorber les chocs (14), et installé sur ledit cadre support rigide (18), **caractérisé par** un dispositif de sécurité (10) comprenant au moins un coulisseau (23) fixé solidement audit cadre support (18), ledit coulisseau étant monté entre une paire de plaques de guidage (27) disposées sur ledit élément pour absorber les chocs (14) et fixé audit élément et en ce que l'axe longitudinal dudit coulisseau (23) est essentiellement parallèle au sens de déplacement dudit moyen de transport.

2. Table (11) selon la revendication 1, **caractérisée en ce que** ladite table (10) est montée sur ledit cadre support rigide (18) de telle sorte qu'il est au moins partiellement mobile par rapport audit cadre support rigide.

3. Table (11) selon la revendication 2, **caractérisée en ce qu'**elle comprend en correspondance avec chaque côté longitudinal, un élément en forme de coin (26) conçu pour déployer partiellement l'élément pour absorber les chocs (14), en cas d'impact violent de ladite table (11) avec un autre corps.

4. Table (11) selon la revendication 3, **caractérisée en ce que** ledit élément en forme de coin (26) présente une section transversale triangulaire ou semi-elliptique.

5. Table (11) selon l'une des revendications 2 à 4, **caractérisée en ce que** chacune des plaques de guidage (27) comprend une base (29) présentant un tasseau latéral surélevé (31).

6. Table (11) selon la revendication 5, **caractérisée en ce que** ledit tasseau (31) comprend une section chanfreinée (32) à chaque extrémité longitudinale.

7. Table (11) selon l'une des revendications 2 à 6, **caractérisée en ce que** ledit coulisseau (23) comprend une entretoise sur la surface opposée audit cadre (18).

8. Table (11) selon l'une des précédentes revendications, **caractérisée en ce que** l'élément pour absorber les chocs se compose d'un panneau (14) entouré de feuilles (15) de matériau métallique et de couches de plastique laminé.

9. Table (11) selon la revendication 8, **caractérisée en ce que** ledit panneau (14) a une configuration alvéolaire avec des cellules susceptibles d'être remplies de matériau de mousse.

10. Table (11) selon l'une des précédentes revendications, **caractérisée en ce qu'**elle est disposée dans un train ou un véhicule motorisé, par exemple un bus ou une caravane, ou encore un avion ou un bateau.
